# EUROPEAN PATENT APPLICATION

(11) **EP 4 398 064 A1**
(43) Date of publication of application: **10.07.2024**
(21) Application number: 23209655.2
(22) Date of filing: 14.11.2023
(51) Int. Cl.: G05G 1/405, G05G 1/44

(54) **PEDAL ARRANGEMENT FOR A VEHICLE AND VEHICLE HAVING SUCH A PEDAL ARRANGEMENT**

(30) Priority: 23.12.2022 SE 2251572
(71) Applicant: CJ Automotive AB, 514 63 Dalstorp (SE)
(72) Inventor: Amirian, Mahdi, 504 65 Borås (SE)
(74) Representative: Bergenstråhle & Partners AB

(57) **Abstract**

Disclosed is a pedal arrangement for a vehicle, which is switchable between a sport mode and a comfort mode. The pedal arrangement comprises a bracket (10) for attachment to a chassis of the vehicle, an elongate pedal arm (20) having a first pedal arm end (20a) rotatably attached to the bracket (10) and a compressible elongate actuator (30) pivotably attached to the pedal arm (20). The elongate actuator (30) contains a spring (35) extending in the actuator direction (A). In sport mode, a second actuator end (30b) is situated at a first position (10b) of the bracket (10), and in comfort mode, the second actuator end (30b) is situated at a second position (10c) of the bracket (10). The pedal arrangement further comprises a switching arrangement for moving the second actuator end (30b) between the first position (10b) and the second position (10c) of the bracket, in response to switching between sport mode and comfort mode.

## Description

### Technical field

The present invention relates generally to a pedal arrangement for a vehicle for switching a pedal arm between a first driving mode and a second driving mode. The present invention further relates to a vehicle comprising such a pedal arrangement.

### Background art

A feature in some motor-driven vehicles today is a possibility to switch between different driving modes, such as between a comfort mode, i.e., regular usage mode or a sport mode. In sport mode, settings of the vehicle are changed to e.g., improve performance. When sport mode is activated, settings such as engine settings, transmission settings and suspension settings are changed so that the driving experience changes considerably compared to comfort mode. For example, the suspension settings are stiffer in sport mode than in comfort mode.

In order to change between comfort mode and sport mode, the driver of the vehicle can for example press a "Sport mode" button in order to enter sport mode and a "Comfort mode" button in order to enter comfort mode. Then a signal is sent to a control unit of the vehicle, and the control unit initiates changes of the vehicle settings which for the certain vehicle is compatible with sport mode and comfort mode, respectively.

For pedal arrangements of motor-driven vehicles, such as an accelerator pedal arrangement or a brake pedal arrangement, the pedal arrangement is connected to a system for controlling speed of a vehicle. When a brake pedal arrangement is in sport mode, a pressing of the brake pedal should result in a faster response, e.g., a harder braking than when pressing the brake pedal when the brake pedal arrangement is in comfort mode. At the same time, the pedal feel for the driver should be accurate, which means that when depressing the pedal with a certain force, the vehicle should decelerate accordingly. An accelerator pedal arrangement should work in a similar way. Different vehicle manufacturers have different requirements on how the response should be when the driver presses and releases the pedal, i.e., the pedal feel could be different for different vehicle brands.

Consequently, there is a need for a pedal arrangement that can be switched between sport mode and comfort mode in a well-controlled and safe way. Further, the pedal feel for the driver should be accurate according to manufacturer requirements in both sport mode and comfort mode. Further, it is advantageous if such a pedal arrangement is cost-efficient.

### Summary of invention

It is an object of the invention to address at least some of the problems and issues outlined above. It is an object of embodiments of the invention to provide a pedal arrangement that can be switched between a first driving mode and a second driving mode in a well-controlled way. It is another object of embodiments to provide a pedal arrangement with a pedal feel for the driver that is in accordance with vehicle behavior when actuating the pedal arm in the first driving mode as well as in the second driving mode. It is possible to achieve these objects and others by using a pedal arrangement and a vehicle as defined in the attached independent claims.

According to one aspect, a pedal arrangement for a vehicle is provided, which pedal arrangement is switchable between a first driving mode and a second driving mode. The pedal arrangement comprises a bracket for attachment to a chassis of the vehicle and an elongate pedal arm having a first pedal arm end rotatably attached to the bracket at a first pedal arm end position of the bracket and a second pedal arm end distal to the first pedal arm end. The pedal arrangement further comprises a compressible elongate actuator having a first actuator end and a second actuator end distal to the first actuator end, the elongate actuator extending in an actuator direction between its first and second actuator ends. The first actuator end is pivotably attached to the elongate pedal arm at an actuator attachment point situated between the first pedal arm end and the second pedal arm end. The elongate actuator contains a spring extending in the actuator direction. In the first driving mode, the second actuator end is situated at a first position of the bracket at a first distance from the first pedal arm end position. In the second driving mode, the second actuator end is situated at a second position of the bracket at a second distance from the first pedal arm end position. The first distance is shorter than the second distance. The spring has a shorter extension in the first driving mode than in the second driving mode, when the pedal arm is in a resting position. The pedal arrangement further comprises a switching arrangement for moving the second actuator end between the first position and the second position of the bracket, in response to switching between the first driving mode and the second driving mode.

Consequently, the pedal arrangement has a compressible actuator with a spring that is arranged so that in the first driving mode, the spring has a shorter extension, i.e., is more tense than in the second driving mode. Hereby, more force is needed to push the pedal from its resting position by the driver and the pedal can be pushed a shorter distance in the first driving mode than in the second driving mode. So, a first driving mode, that can be called sport mode, and a second driving mode, that can be called comfort mode, are achieved for the pedal feel for the driver just by moving the actuator so that in the second driving mode, the second actuator end is positioned further away from the first actuator end than in the first driving mode. Hereby, the system for controlling speed of the vehicle can act in a similar way for affecting braking or accelerating in both driving modes, i.e., to give a control to braking or accelerating of the vehicle in response to the resistance of pressing the pedal, which gives an accurate pedal feel for the driver. Also, by using a switching arrangement for mechanically moving the actuator between its first and second positions, a safe and reliable switch between driving modes of the pedal is achieved.

According to an embodiment, the elongate actuator comprises a first housing that extends from the first actuator end towards the second actuator end, the first housing thereby being pivotably attached to the elongate pedal arm. The first housing at least partly encloses the spring from a first end of the spring. The elongate actuator further comprises a second housing that extends from the second actuator end towards the first actuator end, the second housing at least partly enclosing the spring from a second end of the spring opposite the first end. Further, either the first housing partly encloses the second housing, or the second housing partly encloses the first housing. Hereby, the spring is protected by the first housing and the second housing, and its compressing and decompressing is controlled to take part only in the actuator direction.

According to another embodiment, the pedal arrangement further comprises a stop arranged on the bracket or on the pedal arm for preventing rotation of the pedal arm from its resting position and away from the second end of the actuator. Such a stop is used for preventing the pedal arm to rotate backwards against the foot of the driver when installed in a vehicle, due to the pretension applied to the pedal arm due to the pretension of the spring at least in the first driving mode.

According to another embodiment, when the pedal arm is depressed, the pedal arm is arranged to rotate from its resting position around its rotatable attachment to the bracket at its first pedal arm end position so that its second end moves towards the second end of the actuator whereby the elongate actuator as well as its spring are compressed.

According to yet another embodiment, the switching arrangement comprises a motor connected to the actuator for moving the second actuator end between the first position and the second position of the bracket when switching between the first driving mode and the second driving mode. When a control unit communicatively connected to the pedal arrangement receives an instruction to switch the pedal arrangement from the first driving mode to the second driving mode, or vice versa, the control unit is arranged to drive the motor to move the second actuator end from the first position to the second position of the bracket, or vice versa.

According to another embodiment, the switching arrangement further comprises a first shaft to be rotated by the motor and a lever having a first end firmly attached to the first shaft and a second end rotatably connected to the second actuator end, whereby the motor is arranged to move the second actuator end between the first position and the second position of the bracket by rotating the first shaft so that the lever rotates. Such an arrangement for switching the pedal arrangement between first and second driving modes by a rotational movement of the second actuator end provides a safe and reliable switching. In addition, the switching can be accomplished quickly and silently.

According to yet another embodiment, the switching arrangement further comprises a second shaft to be rotated by the motor, and a sledge. The sledge is rotatably attached to the second shaft. The second actuator end is firmly attached to the sledge. The motor is arranged to move the second actuator end between the first position and the second position of the bracket by rotating the second shaft so that the sledge moves linearly along the second shaft. Such an arrangement for switching the pedal arrangement between the first and the second driving mode by a linear movement of the second actuator end provides safe and reliable switching between the first and second driving modes. In addition, it is possible to have many intermediate positions of the second actuator end, as the movement of the sledge linearly provides the possibility of stopping the movement of the sledge anywhere. Thereby, it is possible to provide many more different driving modes than the first and second driving mode. Also, the first and second position of the second actuator end can be changed for individual vehicles according to e.g., a driver's personal requests for pedal feel in the first and second driving mode, respectively.

According to yet another embodiment, the bracket comprises a first seat situated at the first position of the bracket, the first seat being arranged for keeping the second actuator end in the first position of the bracket when in the first driving mode. Alternatively, or in combination with the first seat, the bracket comprises a second seat situated at the second position of the bracket, the second seat being arranged for keeping the second actuator end in the second position of the bracket when in the second driving mode. Hereby, the first and second positions are well defined. Also, there will be no stress on the lever or the motor as the second actuator end will rest in the first or second seat when being in the first or second position of the bracket.

According to still another embodiment, the bracket comprises an attachment device situated at the first pedal arm end position of the bracket. The attachment device comprises an attachment shaft and two substantially parallel sections. The attachment shaft extends between the two substantially parallel sections. The first pedal arm end is rotatably attached to the attachment shaft.

According to another aspect, a vehicle is provided comprising at least one pedal arrangement according to any of the above embodiments.

Further possible features and benefits of this solution will become apparent from the detailed description below.

### Brief Description of Drawings

The solution will now be described in more detail by means of exemplary embodiments and with reference to the accompanying drawings.
Fig. 1 is a side view of a pedal arrangement according to a first embodiment of the invention when being in a resting position in a first driving mode, e.g., comfort mode.
Fig. 2 is a side view in cross-section of the pedal arrangement according to the first embodiment when being in the resting position in the first driving mode.
Fig. 3 is a side view of the pedal arrangement according to the first embodiment when the pedal is depressed and when in the first driving mode.
Fig. 4 is a side view of the pedal arrangement according to the first embodiment when being in a resting position in a second driving mode, e.g., sport mode.
Fig. 5 is a side view in cross-section of the pedal arrangement according to the first embodiment when being in the resting position in the second driving mode.
Fig. 6 is a side view of the pedal arrangement according to the first embodiment when the pedal is depressed and when in the second driving mode.
Fig. 7 is a front view of the pedal arrangement according to the first embodiment.
Fig. 8 is a side view of a pedal arrangement according to a second embodiment, when being in a resting position.
Fig. 9 is a view from above of the pedal arrangement according to the second embodiment.
Fig. 10 is a cross-sectional side view taken in section B-B in fig. 9.

### Description of embodiments

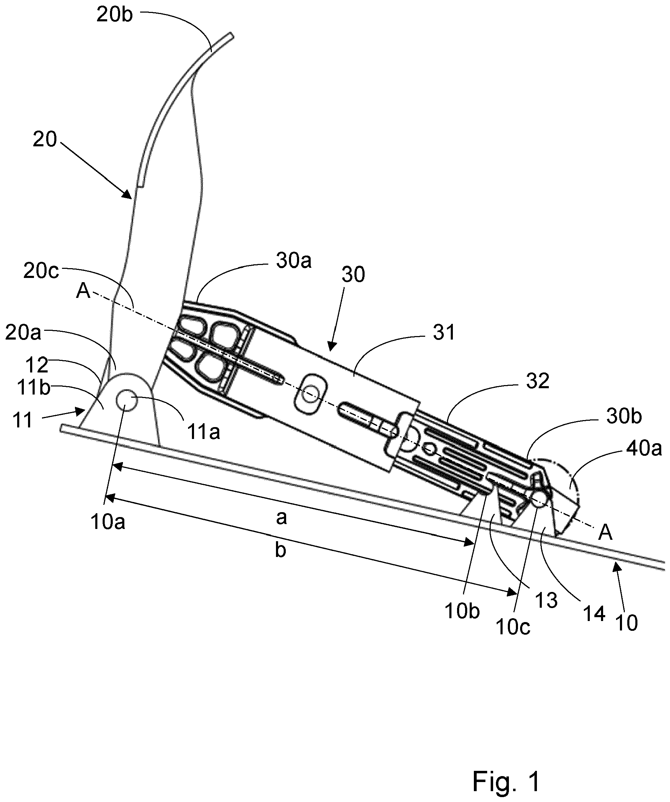

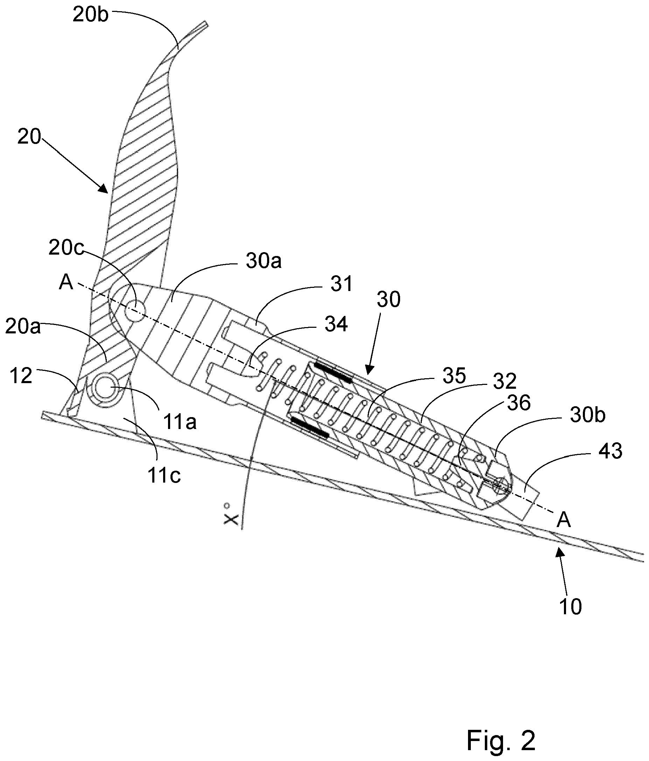

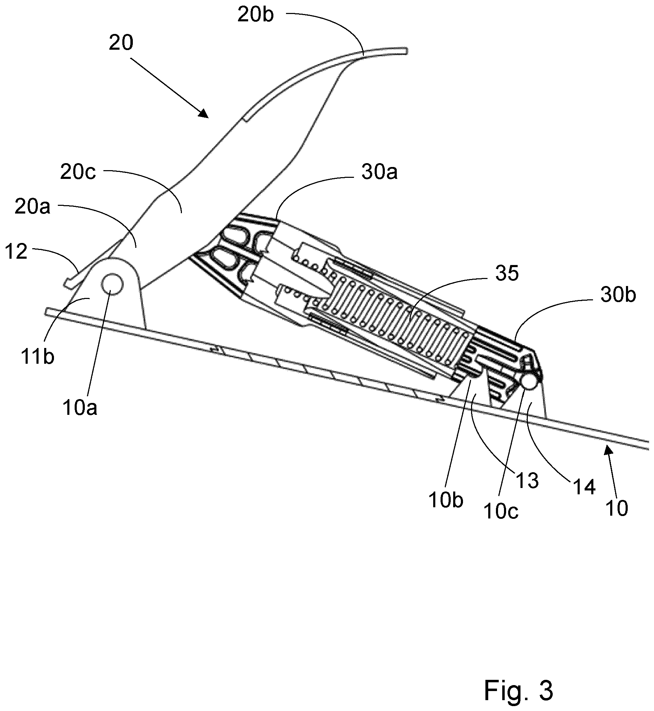

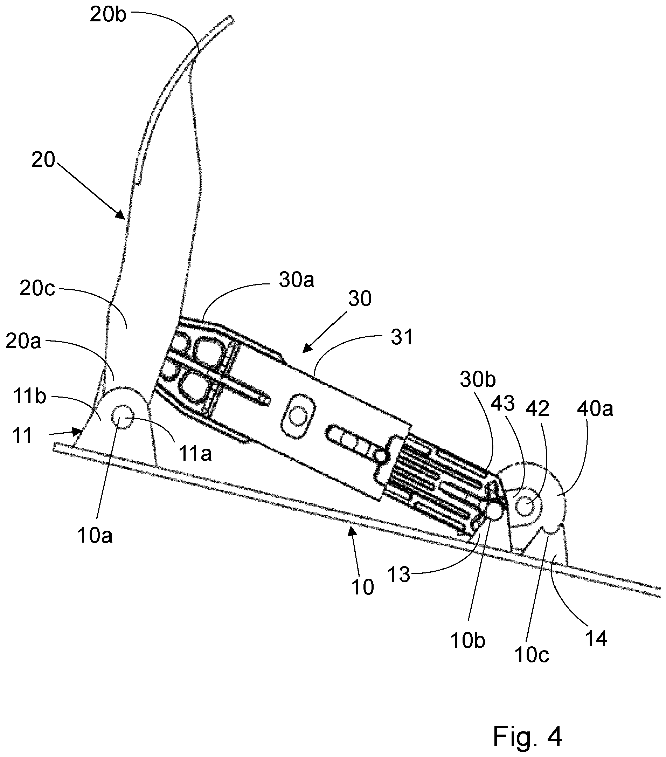

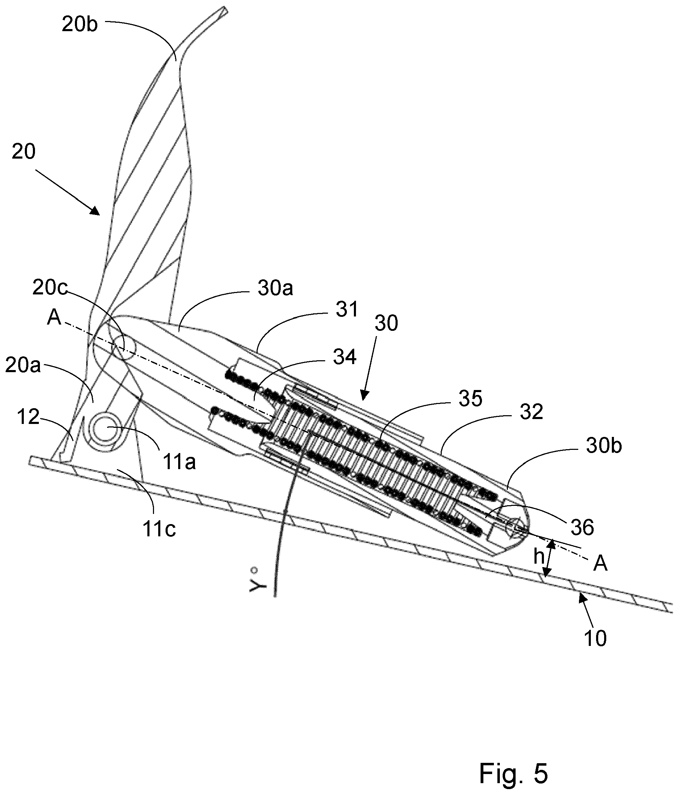

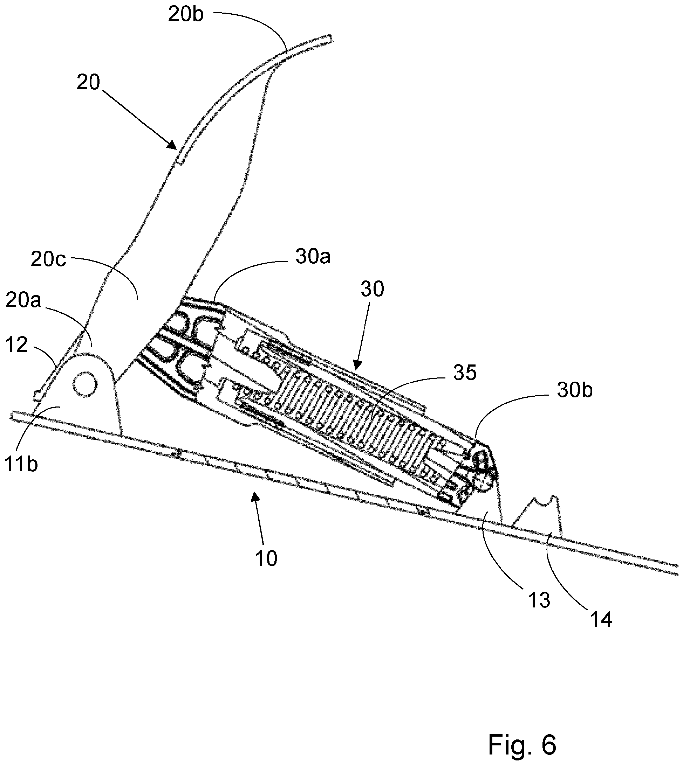

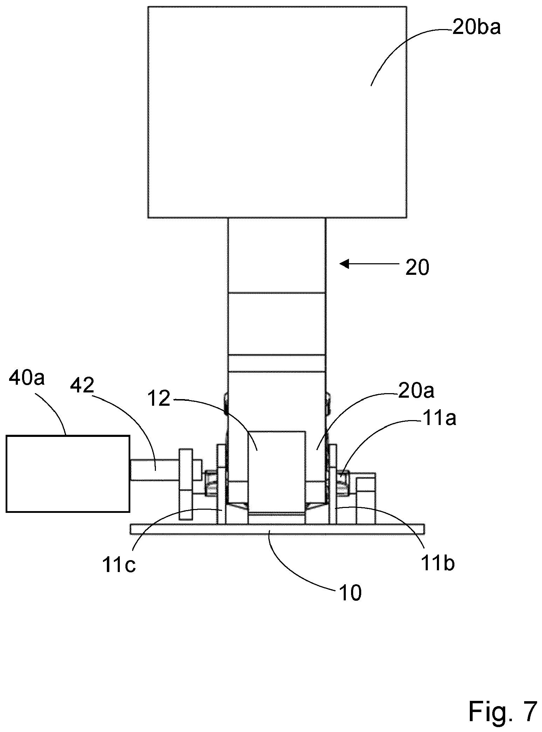

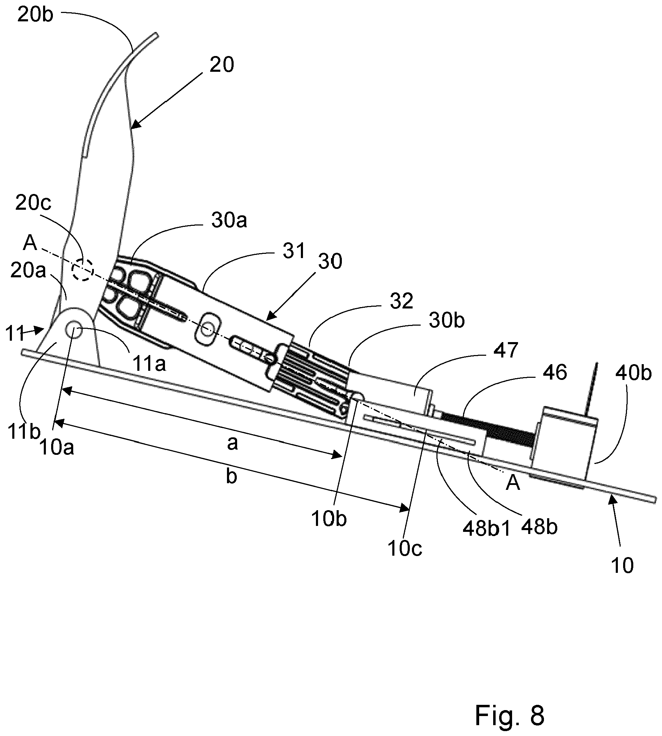

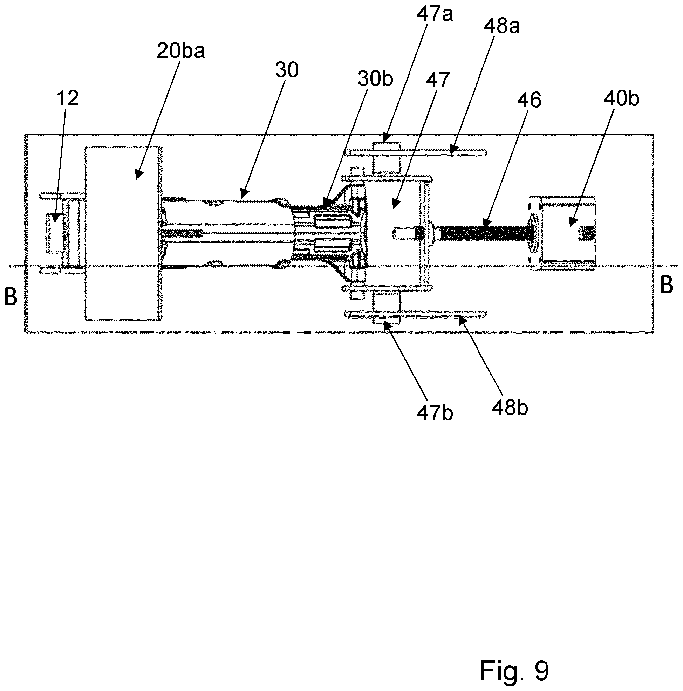

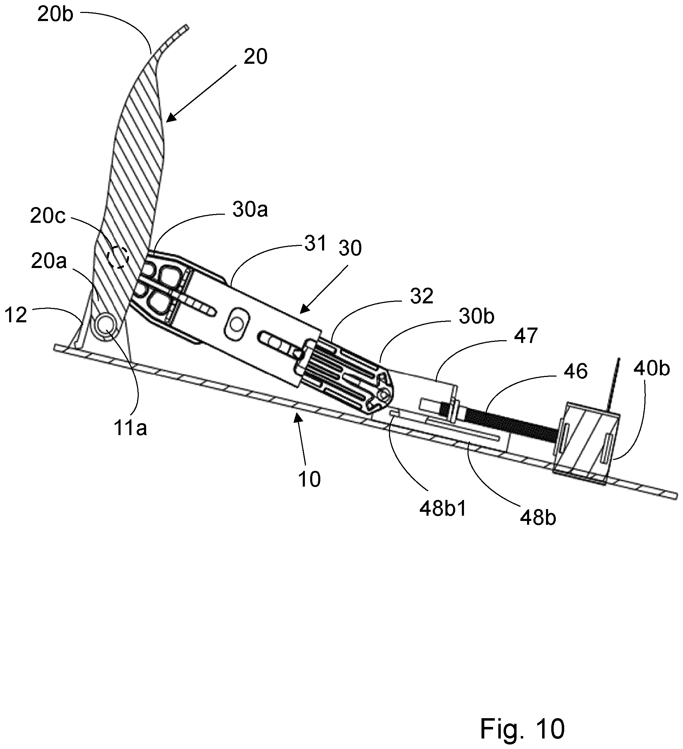

Figs. 1-7 describe a first embodiment of a pedal arrangement according to the invention. Figs. 1 and 2 each shows the pedal arrangement in its resting position when in the second driving mode, in the following called comfort mode. "Resting position" here means that a pedal arm 20 of the pedal arrangement is unactuated, i.e., not pressed upon. Fig. 3 shows the pedal arrangement when its pedal arm 20 is pressed down when in the comfort mode. Figs. 4 and 5 each shows the pedal arrangement in its resting position when in the first driving mode, in the following called sport mode. Fig. 6 shows the pedal arrangement when its pedal arm 20 is pressed down when in the sport mode. Fig. 7 shows the pedal arrangement from a front view, where a pedal 20ba of the pedal arrangement fronts the viewer. Figs. 8-10 describe a second embodiment of a pedal arrangement according to the invention. Fig. 8 shows a side view of the second embodiment, fig. 9 shows a top view and fig. 10 shows a side view in cross-section. Figs. 8-10 show the pedal in sport mode in a resting position.

With reference to Figs. 1-10 of both embodiments, the pedal arrangement comprises a bracket 10 arranged to be attached to a chassis of a vehicle, when the pedal arrangement is to be installed in a vehicle. The bracket 10 may be a substantially flat piece, of e.g., metal. The pedal arrangement further comprises a pedal arm 20, preferably elongate, having a first pedal arm end 20a rotatably attached to the bracket 10 at a first pedal arm end position 10a of the bracket 10. The pedal arm 20 further has a second pedal arm end 20b distal to the first pedal arm end 20a. The second pedal arm end 20b may be called a free end as it is not attached to anything. The second pedal arm end 20b has an area 20ba (fig. 7) that is adapted for receiving e.g., a foot of a driver of a vehicle.

The pedal arrangement further comprises a compressible elongate actuator 30 having a first actuator end 30a and a second actuator end 30b distal to the first actuator end 30a. The elongate actuator 30 extends in an actuator direction A-A between its first and second actuator ends 30a, 30b. The elongate actuator comprises a spring 35 extending in the actuator direction A-A, (see e.g., fig. 2 and 5). The spring 35 is concealed in the figures 8-10 of the second embodiment. However, the spring 35 is arranged in the same way in the second embodiment as in the first embodiment. The first actuator end 30a is pivotably attached to the elongate pedal arm 20 at an actuator attachment point 20c of the pedal arm 20 situated between the first pedal arm end 20a and the second pedal arm end 20b.

When the pedal arrangement is installed in a vehicle, the actuator 30 is connected to a system for controlling speed of a vehicle such as for braking or accelerating the vehicle so that, depending on manipulating or actuating of the pedal arm 20 by a driver of the vehicle, the speed of the vehicle is controlled. When the pedal arm 20 is depressed, the actuator 30, and thereby it's spring 35 is compressed in relation to the compression force of the driver onto the pedal arm 20. The system for controlling speed of the vehicle then reacts by braking, when being a brake pedal arrangement, or accelerating, when being an accelerator pedal arrangement, the vehicle in relation to the compression force.

The system for controlling speed of a vehicle can be an electric driven system. Then the movement or compression force of the pedal arm 20 may be sensed by a sensor, not shown in the figures, which sends a signal to the system for controlling speed of a vehicle, e.g., affecting a braking or accelerating of the vehicle in dependence on the sensing of the sensor. The system for controlling speed of a vehicle is not part of the invention and is not shown in the figures.

Further, when the pedal arrangement is in sport mode, the second actuator end 30b is situated at a first position 10b of the bracket 10 at a first distance a from the first pedal arm end position 10a. When the pedal arrangement is in comfort mode, the second actuator end 30b is situated at a second position 10c of the bracket 10 at a second distance b from the first pedal arm end position 10a. The first and second distances a,b are measured along the bracket 10. The first distance a is shorter than the second distance b. Hereby, the spring 35 has a shorter extension in sport mode than in comfort mode, when the pedal arm 20 is in the resting position. The pedal arrangement further has a switching arrangement for moving the second actuator end 30b between the first position 10b of the bracket and the second position 10c of the bracket in response to an instruction for switching the pedal arrangement between sport mode and comfort mode, the instruction originating from the driver of the vehicle.

The driver of the vehicle indicates that he/she wishes to change the settings of the vehicle from sport mode to comfort mode, or vice versa, which, for example, is made by the driver pushing a button adapted for such a measure. In response to receiving such indication or instruction originating from the driver, a control unit of the vehicle and/or the pedal arrangement instructs or initiates the switching arrangement to move the second actuator end 30b between the first position 10b and the second position 10c of the bracket 10.

Further, when the pedal arm 20 is depressed, the pedal arm 20 rotates around its pivotal attachment of its first pedal arm end 20a to the bracket 10 towards the second actuator end 30b. When the pedal arm 20 is depressed, the actuator 30 is compressed whereby the spring 35 is compressed. The tension of the spring gradually increases the more the pedal arm 20 is depressed. When the actuator 30 is in the sport mode, the actuator is shorter in the rest position than when the actuator is in the comfort mode. When the actuator 30 is shorter, also the spring 35 is shorter and thereby the initial tension is higher in the sport mode than in the comfort mode. Also, in the sport mode the pedal arm 20 can be pushed a shorter way away from its rest position than when in the comfort mode.

As shown in figs. 2 and 5, there is an angle X and Y, respectively, between the actuator direction A-A and an extension of the bracket 10 in the rest position. Fig.2 shows the pedal arrangement in comfort mode in the rest position, here the angle is X. Fig. 5 shows the pedal arrangement in sport mode in the rest position, here the angle is Y. The angles X and Y can be varied depending on a wish of a certain vehicle manufacturer. The angles X and Y depend on the length of the actuator 30 as well as the position of the actuator attachment point 20c of the pedal arm 20 between the first pedal arm end 20a and the second pedal arm end 20b and the position of the second actuator end 30b. In case the second actuator end 30b is situated at the same height h above the bracket in both sport mode and comfort mode, the angle Y will be larger than the angle X as the actuator 30 is shorter in sport mode than in comfort mode. This is applicable in the second embodiment as well as in the first embodiment.

According to an embodiment, the bracket 10 comprises an attachment device 11 situated at the first pedal arm end position 10a of the bracket 10. The attachment device 11 provides the rotatable attachment of the first pedal arm end 20a of the pedal arm 20 to the bracket 10. In one embodiment, the attachment device 11 comprise an attachment shaft 11a onto which the first pedal arm end 20a is rotatably attached, and two substantially parallel sections 11b, 11c. The attachment shaft 11a extends between the two substantially parallel sections 11b, 11c, see e.g., fig. 7.

According to another embodiment, the elongate actuator 30 comprises a first housing 31 that extends from the first actuator end 30a towards the second actuator end 30b. The first housing 31 is pivotably attached to the elongate pedal arm 20 at the actuator attachment point 20c of the pedal arm 20. The first housing 31 at least partly encloses the spring 35 from a first end of the spring. The elongate actuator 30 further comprises a second housing 32 that extends from the second actuator end 30b towards the first actuator end 30a. The second housing 32 at least partly encloses the spring 35 from a second end of the spring opposite the first end. In the embodiments shown, the first housing 31 partly encloses the second housing 32. However, it is also possible that the second housing 32 partly encloses the first housing 31.

According to some embodiments, shown in Figs. 2 and 5, the elongate actuator 30 comprises a first projection portion 34 that is arranged inside the actuator 30, onto which a first end of the spring 35 is arranged. The first projecting portion 34 is arranged in a part of the actuator 30 that is close to the first actuator end 30a. The first projecting portion 34 may be a part of the first housing 31, when combined with the embodiment having the first and second housing 31, 32. Further, the elongate actuator 30 comprises a second projection portion 36 arranged inside the actuator 30, onto which a second end of the spring 35 is arranged, opposite the first end of the spring. The second projecting portion 36 is arranged in a part of the actuator 30 that is close to the second actuator end 30b. The second projecting portion 36 may be a part of the second housing 32, when combined with the embodiment having the first and second housing 31, 32. The first and second projecting portions 34, 36 are used for e.g., centering and guiding the spring 35 when being compressed or decompressed. Even though not shown in Figs. 8-10, this embodiment is applicable also in the second embodiment.

According to another embodiment, the pedal arrangement further comprises a stop 12 arranged on the bracket 10 or on the pedal arm 20 for preventing rotation of the pedal arm 20 from its resting position and away from the second actuator end 30b. The purpose of this stop 12 is to see to that the pedal arm 20 cannot move backwards from the resting position in a direction towards the feet of a driver, when the pedal arrangement has been installed in a vehicle. According to one alternative, as shown e.g., in fig. 2 and fig. 10, the stop 12 is firmly arranged to the pedal arm 20 at an opposite side of the pedal arm 20 compared to the side where the actuator 30 is situated. The stop 12 extends downwards, i.e. towards the bracket 10 so that when the pedal arm 20 is rotated away from the second end 30b of the actuator 30, the rotation movement will be stopped when the stop 12 hits the bracket 10. According to another alternative, the stop 12 is firmly arranged with one end to the bracket 10, at a position behind the first pedal arm end 20a, that is, at the opposite side of the first pedal arm end position 10a of the bracket 10 compared to the side of the first pedal arm end position 10a where the first and second position 10b, 10c of the bracket 10 are situated. The stop 12 extends upwards from the bracket 10, i.e., on the same side of the bracket 10 as the pedal arm 20 is situated, so that if the pedal arm 20 would be pressed away from the second actuator end 30b from the resting position, the pedal arm 20 would bump into and be stopped by the stop 12.

Further, the switching arrangement may comprise a motor (40a in the first embodiment, see fig. 1,4 and 7, and 40b in the second embodiment, see figs. 8-10). The motor 40a; 40b is connected to the actuator 30 for moving the second actuator end 30b between the first position 10b and the second position 10c of the bracket 10 when the pedal arrangement is switched between sport mode and comfort mode. Alternatively, the switching arrangement may comprise a lever for manual movement of the second actuator end 30b between the first position 10b and the second position 10c of the bracket 10.

In the first embodiment shown in figs. 1, 4 and 7, the switching arrangement further comprises a first shaft 42 connected to the motor 40a, the first shaft 42 being arranged for rotation by the motor 40a. The first shaft 42 may extend substantially perpendicular to the extension of the elongate actuator 30 and substantially parallel to the bracket 10. The switching arrangement further has a lever 43 that has a first end firmly attached to the first shaft 42 and a second end rotatably connected to the second actuator end 30b. Thereby, when the motor 40a rotates the first shaft 42, the second actuator end 30b is moved between the first position 10b and the second position 10c of the bracket, the movement direction depending on the rotation direction of the first shaft 42. In other words, the lever 43 follows the rotating movement of the first shaft 42.

Further, and as shown in figs. 1, 3, 4 and 6, the bracket 10 may comprise a first seat 13 situated at the first position 10b of the bracket 10. The first seat 13 is arranged for keeping the second actuator end 30b in the first position 10b of the bracket when the pedal arrangement is in sport mode. The bracket 10 may also comprise a second seat 14 situated at the second position 10c of the bracket 10. The second seat 14 is arranged for keeping the second actuator end 30b in the second position 10c when in comfort mode. An alternative to having such a first and second seat 13, 14 for holding the second actuator end 30b in its respective position for sport mode and comfort mode is to have end positions for the first shaft 42 programmed into the motor 40a so that the motor itself already knows how far to rotate the first shaft 42 when switching between sport mode and comfort mode.

In the embodiment of Figs. 8-10, the switching arrangement further comprises a second shaft 46 to be rotated by the motor 40b. The second shaft 46 may extend substantially parallel to the bracket 10 and in a similar general direction as the elongate actuator 30. The switching arrangement further comprises a sledge 47 that is is rotatably attached to the second shaft 46 and firmly attached to the elongate actuator 30, preferably at the second actuator end 30b. When the motor rotates the second shaft 46, the sledge 47 moves linearly along the second shaft 46 so that the second actuator end 30b is moved between the first position 10b and the second position 10c of the bracket. Preferably, the second shaft 46 is threaded and the sledge 47 has a through-hole that is threaded in order to cooperate with the threaded second shaft 46 in order to provide the linear movement of the sledge 47 when the second shaft 46 is rotated. Further, the switching arrangement may have two guides 48a, 48b securely arranged on the bracket 10, at opposite sides of the sledge 47. The two guides 48a, 48b extend parallel to the second shaft 46. Each of the guides 48a, 48b may have an elongate groove or through-hole 48b1 extending parallel to the second shaft 46, in which grooves or through-holes 48b1 opposite sides of the sledge 47 are arranged to be guided when the sledge 47 moves linearly along the second shaft 46. The sledge 47 may have wings 47a, 47b on its opposite sides, which each is arranged to be guided in a respective one of the two guides 48a, 48b, such as in their grooves or through-holes 48b1.

Although the description above contains a plurality of specificities, these should not be construed as limiting the scope of the concept described herein but as merely providing illustrations of some exemplifying embodiments of the described concept. It will be appreciated that the scope of the presently described concept fully encompasses other embodiments which may become obvious to those skilled in the art, and that the scope of the presently described concept is accordingly not to be limited. Reference to an element in the singular is not intended to mean "one and only one" unless explicitly so stated, but rather "one or more." All structural and functional equivalents to the elements of the above-described embodiments that are known to those of ordinary skill in the art are expressly incorporated herein by reference and are intended to be encompassed hereby. Moreover, it is not necessary for the pedal arrangement to address each and every problem sought to be solved by the presently described concept, for it to be encompassed hereby.

## Claims

1. A pedal arrangement for a vehicle, which pedal arrangement is switchable between a first driving mode and a second driving mode, the pedal arrangement comprising:
a bracket (10) for attachment to a chassis of the vehicle;
an elongate pedal arm (20) having a first pedal arm end (20a) rotatably attached to the bracket (10) at a first pedal arm end position (10a) of the bracket and a second pedal arm end (20b) distal to the first pedal arm end (20a);
a compressible elongate actuator (30) having a first actuator end (30a) and a second actuator end (30b) distal to the first actuator end (30a), the elongate actuator (30) extending in an actuator direction (A) between its first and second actuator ends (30a, 30b), wherein the first actuator end (30a) is pivotably attached to the elongate pedal arm (20) at an actuator attachment point (20c) situated between the first pedal arm end (20a) and the second pedal arm end (20b), the elongate actuator (30) containing
a spring (35) extending in the actuator direction (A),
wherein in the first driving mode, the second actuator end (30b) is situated at a first position (10b) of the bracket (10) at a first distance (a) from the first pedal arm end position (10a), and in the second driving mode, the second actuator end (30b) is situated at a second position (10c) of the bracket (10) at a second distance (b) from the first pedal arm end position (10a), wherein the first distance (a) is shorter than the second distance (b), wherein the spring (35) has a shorter extension in the first driving mode than in the second driving mode, when the pedal arm (20) is in a resting position,
wherein the pedal arrangement further comprises a switching arrangement for moving the second actuator end (30b) between the first position (10b) and the second position (10c) of the bracket, in response to switching between the first driving mode and the second driving mode.

2. Method according to claim 1, wherein the switching arrangement is arranged for moving the second actuator end (30b) between the first position (10b) and the second position (10c) of the bracket (10) in response to an instruction for switching between the first driving mode and the second driving mode, the instruction originating from a driver of a vehicle in which the pedal arrangement is installed.

3. Pedal arrangement according to claim 1 or 2, wherein the elongate actuator (30) comprises a first housing (31) that extends from the first actuator end (30a) towards the second actuator end (30b), the first housing (31) thereby being pivotably attached to the elongate pedal arm (20), the first housing (31) at least partly enclosing the spring (35) from a first end of the spring,

4. Pedal arrangement according to any of claims 1-3, wherein the elongate actuator (30) comprises a second housing (32) that extends from the second actuator end (30b) towards the first actuator end (30a), the second housing (32) at least partly enclosing the spring (35) from a second end of the spring opposite a first end.

5. Pedal arrangement according to claim 3 and 4, wherein either the first housing (31) partly encloses the second housing (32), or the second housing (32) partly encloses the first housing (31).

6. Pedal arrangement according to any of the preceding claims, further comprising a stop (12) arranged on the bracket (10) or on the pedal arm (20) for preventing rotation of the pedal arm (20) from its resting position and away from the second end (30b) of the actuator (30).

7. Pedal arrangement according to any of the preceding claims, whereby when the pedal arm (20) is depressed, the pedal arm (20) is arranged to rotate from its resting position around its rotatable attachment to the bracket (10) at its first pedal arm end position (10a) so that its second end (20b) moves towards the second end (30b) of the actuator (30) whereby the elongate actuator (30) as well as its spring (35) are compressed.

8. Pedal arrangement according to any of the preceding claims, wherein the switching arrangement comprises a motor (40a; 40b) connected to the actuator (30) for moving the second actuator end (30b) between the first position (10b) and the second position (10c) of the bracket (10) when switching between the first driving mode and the second driving mode.

9. Pedal arrangement according to claim 8, wherein the switching arrangement further comprises a first shaft (42) to be rotated by the motor (40a) and a lever (43) having a first end firmly attached to the first shaft (42) and a second end rotatably connected to the second actuator end (30b), whereby the motor (40a) is arranged to move the second actuator end (30b) between the first position (10b) and the second position (10c) of the bracket (10) by rotating the first shaft (42) so that the lever (43) rotates.

10. Pedal arrangement according to claim 8, wherein the switching arrangement further comprises a second shaft (46) to be rotated by the motor (40b) and a sledge (47), wherein the sledge (47) is rotatably attached to the second shaft (46), and wherein the second actuator end (30b) is firmly attached to the sledge (47), whereby the motor (40b) is arranged to move the second actuator end (30b) between the first position (10b) and the second position (10c) of the bracket by rotating the second shaft (46) so that the sledge (47) moves linearly along the second shaft (46).

11. Pedal arrangement according to any of claims 1-9, wherein the bracket (10) comprises a first seat (13) situated at the first position (10b) of the bracket (10), the first seat (13) being arranged for keeping the second actuator end (30b) in the first position (10b) of the bracket when in the first driving mode, and/or the bracket (10) comprises a second seat (14) situated at the second position (10c) of the bracket (10), the second seat (14) being arranged for keeping the second actuator end (30b) in the second position (10b) of the bracket when in the second driving mode.

12. Pedal arrangement according to any of the preceding claims, wherein the bracket (10) comprises an attachment device (11) situated at the first pedal arm end position (10a) of the bracket.

13. Pedal arrangement according to claim 12, wherein the attachment device (11) comprises an attachment shaft (11a) and two substantially parallel sections (11b, 11c), the attachment shaft (11a) extending between the two substantially parallel sections (11b, 11c), the first pedal arm end (20a) being rotatably attached to the attachment shaft (11a).

14. A vehicle comprising at least one pedal arrangement according to any of the preceding claims.
